# EUROPÄISCHE PATENTANMELDUNG

(11) **EP 4 737 068 A1**
(43) Veröffentlichungstag der Anmeldung: **06.05.2026**
(21) Anmeldenummer: 24209754.1
(22) Anmeldetag: 30.10.2024
(51) Int. Cl.: B25J 9/16, B23Q 7/04, B25J 9/00

(54) **VERFAHREN ZUR AUTOMATISIERTEN HANDHABUNG VON WERKSTÜCKEN, AUTOMATIONSMODUL SOWIE SYSTEM AUS EINEM AUTOMATIONSMODUL UND EINER TRANSFERVORRICHTUNG**

(71) Anmelder: MG Beteiligungsgesellschaft mbH, 73312 Geislingen/Steige (DE)
(72) Erfinder: Grüner,, Herr Magnus, 73312 Geislingen/Steige (DE); Grüner,, Herr Tobias, 73312 Geislingen/Steige (DE)
(74) Vertreter: Patentanwälte Magenbauer & Kollegen Partnerschaft mbB

(57) **Zusammenfassung**

Die Erfindung betrifft ein Verfahren zur automatisierten Handhabung von Werkstücken (220) unter Verwendung eines Automationsmoduls (200), mit einem Grundportal, einem Entnahmebereich (210), einer an dem Grundportal angeordneten, einen, in eine Schließstellung (202) und in eine Offenstellung (201) versetzbaren, Greifer aufweisenden Robotereinrichtung (235), einer an dem Grundportal angeordneten, auf den Entnahmebereich (210) gerichteten ersten Kameraeinrichtung (261) und einer Steuereinrichtung (205), sowie unter Verwendung einer Transfervorrichtung, mit einer Fördereinrichtung, zumindest einem Werkstückträger und einem Übergabebereich.

## Beschreibung

Die Erfindung betrifft ein Verfahren zur automatisierten Handhabung von Werkstücken, ein Automationsmodul sowie ein System aus einem Automationsmodul und einer Transfervorrichtung.

Aufgabe der vorliegenden Erfindung ist es, ein Verfahren zur automatisierten Handhabung von Werkstücken, ein Automationsmodul sowie ein System aus einem Automationsmodul und einer Transfervorrichtung bereitzustellen, die effizient und flexibel sind.

Die Aufgabe wird gelöst durch ein nachstehend angeführtes Verfahren:
Das Verfahren zur automatisierten Handhabung von Werkstücken wird unter Verwendung eines Automationsmoduls mit einem Grundportal, einem Entnahmebereich, einer an dem Grundportal angeordneten, einen, in eine Schließstellung und in eine Offenstellung versetzbaren, Greifer aufweisenden Robotereinrichtung, einer an dem Grundportal angeordneten, auf den Entnahmebereich gerichteten ersten Kameraeinrichtung und einer Steuereinrichtung, sowie unter Verwendung einer Transfervorrichtung, mit einer Fördereinrichtung, zumindest einem Werkstückträger und einem Übergabebereich durchgeführt.

Das Verfahren umfasst die folgenden Schritte:
Bei Schritt a. wird wenigstens eine mit einer ersten Ablagefläche ausgestattete erste Werkstückpalette in dem Entnahmebereich bereitgestellt, wobei die erste Werkstückpalette mit Werkstücken bestückt ist, die jeweils einen Greifbereich und eine Unterseite aufweisen, mit der die Werkstücke auf der ersten Ablagefläche abgelegt sind. Bei Schritt b. wird ein Lagebild von der ersten Werkstückpalette und den auf der ersten Werkstückpalette angeordneten Werkstücken mittels der ersten Kameraeinrichtung aufgenommen. Bei Schritt c. werden Lageinformationen der Werkstücke in Bezug zueinander unter Berücksichtigung des Lagebildes ermittelt, wobei die Lageinformationen einzelne Positionen der Werkstücke auf der ersten Ablagefläche umfassen. Bei Schritt d. wird ein geeignetes, zu greifendes Werkstück aus den auf der ersten Ablagefläche angeordneten Werkstücken unter Berücksichtigung der Lageinformationen ausgewählt. Bei Schritt e. wird die Robotereinrichtung mittels der Steuereinrichtung durch Übermitteln der Position des ausgewählten Werkstückes angesteuert, sodass der Greifer an das Werkstück herangefahren wird, das Werkstück mittels des Greifers gegriffen wird, indem der Greifer in die Schließstellung versetzt wird, und das gegriffene Werkstück von der ersten Werkstückpalette entnommen wird. Bei Schritt f. wird der Werkstückträger in dem Übergabebereich mittels der Fördereinrichtung bereitgestellt. Bei Schritt g. wird das gegriffene Werkstück an den Werkstückträger mittels einer durch die Robotereinrichtung durchgeführten Überführungsbewegung überführt und das Werkstück an den Werkstückträger übergeben, wobei bei dem Übergeben der Greifer in die Offenstellung versetzt wird. Bei Schritt h. wird der mit dem Werkstück bestückte Werkstückträger mittels der Fördereinrichtung aus dem Übergabebereich heraus zur weiteren Verwendung in einem Bearbeitungszentrum oder in einem Wasch- und/oder Prüf zentrum bewegen.

Das Automationsmodul kann in einem verarbeitenden Betrieb verwendet werden, insbesondere in einem metallverarbeitenden Betrieb. Als Werkstücke werden dementsprechend insbesondere metallische Werkstücke verwendet, beispielsweise Gussteile, bei denen Funktionsflächen zu bearbeiten sind. Mittels dem Automationsmodul beziehungsweise mittels dem erfindungsgemäßen Verfahren ist es möglich, automatisiert Werkstücke von einer Werkstückpalette zu entnehmen und einem Bearbeitungszentrum oder einem Wasch- und/oder Prüfzentrum zuzuführen. Hierdurch kann der Bedarf an manuell auszuführenden Prozessschritten reduziert werden.

Bevorzugt werden die vorgenannten Schritte gemäß ihrer Nummerierung aufeinanderfolgend ausgeführt, das heißt zuerst Schritt a., dann Schritt b. und so weiter, wobei Schritt h. als letzter Schritt ausgeführt wird. Schritt f. kann jedoch außerhalb dieser Reihenfolge ausgeführt werden, das heißt parallel zu den Schritte a. bis e., g. und h. Insbesondere kann der Werkstückträger vor dem Bereitstellen der ersten Werkstückpalette in dem Entnahmebereich, währenddessen oder unmittelbar danach in dem Übergabebereich bereitgestellt werden.

Das Grundportal des Automationsmoduls weist mehrere Portalelemente, beispielsweise Portalträger und/oder Portalwände auf. Ein Portalträger ist ein stabartiges Element, beispielsweise ein Balken. Eine Portalwand ist ein flächiges Element. Die Portalelemente sind derart ausgebildet und aneinander befestigt, dass die Robotereinrichtung des Automationsmoduls und die erste Kameraeinrichtung des Automationsmoduls jeweils an dem Grundportal betriebsbereit angeordnet sind. Das bedeutet, dass das Grundportal einer Bewegung des Greifers, mit dem insbesondere ein Werkstück gegriffen ist, standhält, ohne dass die Positionierung des Greifers oder die Aufnahme des Lagebildes mittels der ersten Kameraeinrichtung beeinträchtigt wird. Dabei ist das Grundportal eingerichtet, den Greifer ohne Verformung des Grundportals beziehungsweise ohne Auslenkung der Portalelemente zueinander zu bewegen.

Der Entnahmebereich des Automationsmoduls ist derart in Bezug auf das Grundportal angeordnet, dass der Greifer zu dem Entnahmebereich bewegbar ist, um ein Werkstück aus der in dem Entnahmebereich bereitgestellten ersten Werkstückpalette zu entnehmen. Bevorzugt überdeckt das Grundportal den Entnahmebereich. Alternativ ist der Entnahmebereich neben dem Grundportal angeordnet.

Die Robotereinrichtung weist den Greifer auf. Mittels dem Greifer sind Werkstücke greifbar. Um ein Werkstück zu greifen, wird der Greifer an den Greifbereich des zu greifenden Werkstückes herangefahren. Sodann wird der Greifer von der Offenstellung in die Schließstellung versetzt. In der Schließstellung ist der Greifer derart gegen den Greifbereich gespannt, dass zwischen dem Greifer und dem Greifbereich und damit dem Werkstück eine formschlüssige und/oder kraftschlüssige Verbindung ausgebildet ist. Insbesondere ist die Verbindung zwischen dem Greifer und dem Werkstück in der Schließstellung so fest, dass das Werkstück nicht von beziehungsweise an dem Greifer abgleitet.

Bevorzugt weist die Robotereinrichtung einen Kollisionssensor auf. Der Kollisionssensor ist dazu eingerichtet, eine Kollision des Greifers und/oder eines von dem Greifer gegriffenen Werkstückes mit der Umgebung, insbesondere mit der ersten Werkstückpalette und/oder anderen Werkstücken, zu erfassen. Die Steuereinrichtung kann dazu eingerichtet sein, die Bewegung der Robotereinrichtung im Sinne eines Nothalts zu beenden, falls eine Kollision erfasst wird.

Als Lageinformationen der Werkstücke in Bezug zueinander werden Informationen bezeichnet, die eine entsprechende Anordnung der Werkstücke betreffen, nämlich eine Anordnung der Werkstücke in Bezug zueinander, beispielsweise einen jeweiligen Abstand der Werkstücke zueinander. Bevorzugt umfassen die Lageinformationen ferner einzelne Positionen der Werkstücke auf der Ablagefläche. Weiter bevorzugt umfassen die Lageinformationen ferner Informationen zu einer Anordnung der Werkstücke in Bezug auf die erste Werkstückpalette beziehungsweise deren Ablagefläche. Beispielsweise umfassen die Lageinformationen Informationen zu einem jeweiligen Abstand der Werkstücke zu einem äußeren Rand der Ablagefläche und/oder der ersten Werkstückpalette.

Die Position des ausgewählten Werkstückes umfasst jeweils Raumkoordinaten des betreffenden Werkstückes, das heißt Koordinaten in Bezug auf eine x-Achse, in Bezug auf eine senkrecht zu der x-Achse verlaufende y-Achse und in Bezug auf eine senkrecht zu der x-Achse und senkrecht zu der y-Achse verlaufende z-Achse. Die x-Achse und die y-Achse bilden eine horizontale Ebene. Die erste Kameraeinrichtung ist entlang der z-Achse von dem Entnahmebereich beabstandet. Die Position und damit die Raumkoordinaten werden von der Steuereinrichtung an die Robotereinrichtung übermittelt. Die Robotereinrichtung wird mittels der Steuereinrichtung angesteuert, sodass der Greifer unter Berücksichtigung der Position beziehungsweise der Raumkoordinaten des Werkstückes an das Werkstück herangefahren wird.

Die in dem Entnahmebereich bereitgestellte erste Werkstückpalette dient zum Transport der Werkstücke, insbesondere in dem verarbeitenden Betrieb. Bevorzugt ist die erste Werkstückpalette geeignet, mittels, insbesondere fahrerlosen, Transportsystem transportiert zu werden. Ein fahrerloses Transportsystem ist ein selbstfahrendes Transportsystem, das heißt, dass für dessen Betrieb ein Bedienereingriff nicht erforderlich ist.

Bevorzugt ist die erste Werkstückpalette wiederverwendbar. Dementsprechend können mehrfach hintereinander Werkstücke auf der Ablagefläche aufgelegt, mit der ersten Werkstückpalette transportiert und von der Ablagefläche entnommen werden.

Ferner bevorzugt ist die erste Werkstückpalette flach ausgebildet und weist mehrere Standfüße auf, die die Ablagefläche abstützen. Vorzugsweise sind die Standfüße derart ausgebildet und angeordnet, dass zwischen die Standfüße und unter die Ablagefläche ein Transportsystem bewegt werden kann. Anschließend hebt das Transportsystem die erste Werkstückpalette an, sodass ein Kontakt der Standfüße mit dem Boden aufgehoben wird und die erste Werkstückpalette mit dem Transportsystem bewegt werden kann.

Die Transfervorrichtung weist die Fördereinrichtung auf. Die Fördereinrichtung kann beispielsweise als Rollen- oder Bandförderer, als Drehteller oder als Förderschlitten ausgebildet sein. Ein Rollen- oder Bandförderer ist eine Fördereinrichtung, mit der der Werkstückträger entlang einer Förderstrecke mittels Förderrollen (bei einem Rollenförderer) oder einem Fördergurt (bei einem Bandförderer) bewegt wird.

Mit einer als Drehteller ausgebildeten Fördereinrichtung kann der Werkstückträger von dem Übergabebereich hin zu dem Bearbeitungszentrum oder dem Wasch- und/oder Prüf zentrum gedreht werden. Insbesondere kann mit einer einzigen Drehung des Drehtellers ein mit einem zu bearbeitenden oder zu waschenden und/oder zu prüfenden Werkstück bestückter Werkstückträger aus dem Übergabebereich heraus und hin zu dem Bearbeitungszentrum oder dem Wasch- und/oder Prüfzentrum gedreht werden, während gleichzeitig ein mit einem bearbeiteten oder gewaschenen und/oder geprüften Werkstück bestückter Werkstückträger von dem Bearbeitungszentrum oder dem Wasch- und/oder Prüf zentrum weg und hin zu dem Übergabebereich gedreht wird.

Mit einer als Förderschlitten ausgebildeten Fördereinrichtung kann ein mit einem zu bearbeitenden oder zu waschenden und/oder zu prüfenden Werkstück bestückter Werkstückträger aus dem Übergabebereich heraus und hin zu dem Bearbeitungszentrum oder dem Wasch- und/oder Prüf zentrum entlang einer, insbesondere linear ausgebildeten, Schlittenstrecke bewegt werden. In entgegengesetzter Richtung kann ein mit einem bearbeiteten oder gewaschenen und/oder geprüften Werkstück bestückter Werkstückträger entlang der Schlittenstrecke von dem Bearbeitungszentrum oder dem Wasch- und/oder Prüf zentrum weg und hin zu dem Übergabebereich bewegt werden.

Der Werkstückträger dient dem sicheren Transport des vereinzelten Werkstückes hin zu dem Bearbeitungszentrum oder dem Wasch- und/oder Prüfzentrum. Vorzugsweise ist der Werkstückträger dazu eingerichtet, dass ein Werkstück auf den Werkstückträger steckbar ist. Ferner vorzugsweise weist der Werkstückträger hierzu eine Steckkulisse auf, die an eine Außengeometrie des Werkstückes angepasst ist. Die Steckkulisse kann insbesondere durch entsprechende Steckdorne gebildet werden, die jeweils Anschläge oder Führungen für das Werkstück bilden. Fungiert der betreffende Steckdorn als Anschlag, liegt eine Dornspitze des Steckdornes bündig an einer Außen- oder Innenfläche des Werkstückes an. Fungiert der betreffende Steckdorn als Führung, liegt eine Dornseite des Steckdornes bündig an einer Außen- oder Innenfläche des Werkstückes an. Ein Steckdorn kann zudem gleichzeitig als Anschlag und als Führung fungieren. Alternativ oder in Ergänzung ist der Werkstückträger dazu eingerichtet, dass ein Werkstück auf dem Werkstückträger ablegbar ist.

Der Übergabebereich ist der Bereich, in dem die Übergabe des Werkstückes zwischen der Robotereinrichtung und dem Werkstückträger stattfindet. Der Übergabebereich ergibt sich als Schnittmenge eines Roboterwirkbereiches der Robotereinrichtung, in dem ein gegriffenes Werkstück mit der Robotereinrichtung bewegbar ist, und eines Förderwirkbereiches der Fördereinrichtung, in dem ein mit einem Werkstück bestückter Werkstückträger bewegbar ist. Der Übergabebereich kann mehrere als Übergabepositionen bezeichnete Positionen umfassen, an denen eine solche Übergabe des Werkstückes stattfinden kann. Zudem können mehrere Werkstückträger in dem Übergabebereich angeordnet sein.

Das bei Schritt b. aufgenommene Lagebild von der ersten Werkstückpalette und den auf der ersten Werkstückpalette angeordneten Werkstücken wird mittels der ersten Kameraeinrichtung aufgenommen, die entlang der z-Achse von dem Entnahmebereich beabstandet ist. Hierbei wird ein Lagebild in einer durch die x-Achse und die y-Achse aufgespannten Ebene beziehungsweise in einer Ebene, die parallel zu der durch die x-Achse und die y-Achse aufgespannten Ebene verläuft, aufgenommen. Das so aufgenommene Lagebild ist zumindest zweidimensional.

Vorzugsweise werden beim Aufnehmen des Lagebildes von der ersten Werkstückpalette und den auf der ersten Werkstückpalette angeordneten Werkstücken mittels der ersten Kameraeinrichtung außerdem Tiefeninformationen erfasst, wobei vorzugsweise die Tiefeninformationen mit Hilfe einer Punktewolke ermittelt werden. Dementsprechend ist die erste Kameraeinrichtung vorzugsweise dazu ausgebildet, neben den Informationen in Bezug auf die x-Achse und die y-Achse außerdem Tiefeninformationen zu erfassen, das heißt Informationen in Bezug auf die z-Achse. Eine entsprechende erste Kameraeinrichtung wird als 2,5D-Kameraeinrichtung oder 3D-Kameraeinrichtung bezeichnet. Vorzugsweise wird mit der ersten Kameraeinrichtung eine Punktewolke erfasst. Dabei werden einzelnen Bildpunkten des erfassten Bildes Koordinaten jeweils in Bezug auf die x-Achse, die y-Achse und die z-Achse zugeordnet. Die einzelnen Bildpunkte bilden zusammen die Punktewolke.

Bei Schritt c. werden unter Berücksichtigung des zumindest zweidimensionalen Lagebildes Lageinformationen der Werkstücke in Bezug zueinander ermittelt. Die Lageinformationen umfassen einzelne Positionen der Werkstücke auf der Ablagefläche. Dementsprechend kann anhand der Lageinformationen auf die Anordnung der Werkstücke auf der Ablagefläche geschlossen werden.

Vorzugsweise werden beim Ermitteln der Lageinformationen der Werkstücke zusätzlich zu dem Lagebild außerdem Konstruktionsdaten der Werkstücke berücksichtigt. Als Konstruktionsdaten sind dabei insbesondere dreidimensionale Außenkonturen beziehungsweise dreidimensionale Außenflächen der Werkstücke zu verstehen. Hierdurch können ausgehend von dem zumindest zweidimensionalen Lagebild, das Informationen in Hinblick auf die x-Achse und y-Achse enthält, außerdem Informationen in Hinblick die z-Achse, also Tiefeninformationen, und damit in Hinblick auf eine dritte Dimension erlangt werden. Die anhand des Lagebildes ermittelten Lageinformationen der Werkstücke können somit um die Tiefeninformationen erweitert werden.

Dadurch kann das Anfahren der Werkstücke, insbesondere in Bezug auf die z-Achse, vereinfacht werden.

Ferner vorzugsweise werden die mittels der ersten Kameraeinrichtung erhaltenen Tiefeninformationen und die anhand der Konstruktionsdaten erhaltenen Tiefeninformationen miteinander verglichen und/oder zueinander ergänzt.

Bei Schritt d. wird ein geeignetes, zu greifendes Werkstück aus den auf der Ablagefläche angeordneten Werkstücken unter Berücksichtigung der Lageinformationen ausgewählt. Als geeignetes, zu greifendes Werkstück wird ein solches Werkstück ausgewählt, dass mittels dem Greifer greifbar ist, zu dessen Greifbereich der Greifer hinbewegbar ist, und das im gegriffenen Zustand von der ersten Werkstückpalette entnehmbar ist. Insbesondere werden die Werkstücke in einem vorangehenden Sortierverfahren bereits derart auf der Ablagefläche angeordnet, dass jedes Werkstück als geeignetes, zu greifendes Werkstück auswählbar ist. In diesem Fall sind die Werkstücke derart angeordnet, dass auch ein von anderen Werkstücken umgebenes Werkstück von dem Greifer anfahrbar und mittels dem Greifer greifbar ist. Dementsprechend sind die umgebenden Werkstücke ausreichend weit von dem betreffenden Werkstück beabstandet, sodass für den Greifer ausreichend Platz besteht, das als geeignetes, zu greifendes Werkstück ausgewählte Werkstück anzufahren und zu greifen, ohne dabei mit dem entsprechend ausgewählten Werkstück und/oder den umgebenden Werkstücken zu kollidieren.

Bei Schritt e. wird dann das ausgewählte Werkstück von der ersten Werkstückpalette entnommen. Bevorzugt werden bei der Entnahme des gegriffenen Werkstückes von der ersten Werkstückpalette Bewegungsvorgaben berücksichtigt. Als Bewegungsvorgabe wird eine Vorgabe bezeichnet, die zumindest einen ersten Bewegungsabschnitt des Entnahmevorgangs beziehungsweise der Entnahmebewegung des Werkstückes betrifft und anhand derer das Werkstück mittels der Robotereinrichtung bewegt wird. Beispielsweise kann vorgesehen sein, dass das Werkstück zuerst in z-Richtung angehoben wird, bevor das Werkstück auch horizontal, das heißt entlang der x-Achse und/oder der y-Achse bewegt wird.

Bei Schritt f. wird der Werkstückträger in dem Übergabebereich mittels der Fördereinrichtung bereitgestellt. Vorzugsweise ist der Werkstückträger hierbei unbestückt oder ein Werkstück, mit dem der Werkstückträger bereitgestellt ist, wird von dem Werkstückträger entnommen. Jedenfalls ist es erforderlich, dass auf dem Werkstückträger ein freier Bestückungsplatz verfügbar ist, an dem das gegriffene Werkstück angeordnet werden kann. Der Werkstückträger kann mehrere Bestückungsplätze haben, beispielsweise zwei Bestückungsplätze, an denen jeweils ein Werkstück angeordnet werden kann. Bevorzugt weist der Werkstückträger jedoch lediglich einen einzelnen Bestückungsplatz auf.

Die bei Schritt g. durchgeführte Überführungsbewegung kann je nach Ausgestaltung der Robotereinrichtung und zu überbrückendem Weg zwischen der ersten Werkstückpalette und dem Übergabebereich eine lineare Bewegung, eine Schwenkbewegung oder eine kombinierte Bewegung mit zumindest einem linearen Anteil und zumindest einem Schwenkanteil sein.

Als Bearbeitungszentrum wird ein Zentrum bezeichnet, mit dem das Werkstück bearbeitbar ist. Als Bearbeiten des Werkstückes wird dabei ein Umformen, Trennen, Fügen, Beschichten oder Ändern der Stoffeigenschaften des Werkstückes verstanden. Rein exemplarisch ist das Werkstück in dem Bearbeitungszentrum spanend bearbeitbar.

Als Waschzentrum wird ein Zentrum bezeichnet, mit dem das Werkstück waschbar ist, insbesondere um Verunreinigungen des Werkstückes zu entfernen. Solche Verunreinigungen können durch vorgelagerte Bearbeitungsprozesse auftreten. Beispielsweise können nach einer spanenden Bearbeitung noch Späne an dem Werkstück anhaften, die dann abgewaschen werden.

Als Prüfzentrum wird ein Zentrum bezeichnet, bei dem das Werkstück auf bestimmte Eigenschaften geprüft wird. Beispielsweise kann geprüft werden, ob das Werkstück dicht ist, ob vorbestimmte Abmaße des Werkstückes innerhalb eines Toleranzbereiches liegen und/oder ob das Werkstück gratfrei ist. Das Waschzentrum und das Prüfzentrum können in einem Wasch- und Prüf zentrum kombiniert sein.

Das Bearbeitungszentrum, das Waschzentrum und das Prüfzentrum können jeweils als separate Vorrichtungen ausgebildet sein, aber auch als Aneinanderreihung verschiedener Vorrichtungen. Beispielsweise kann das Waschzentrum als Waschstraße ausgebildet sein, bei der das Werkstück hintereinander verschiedene Waschstationen durchläuft.

Weitere die Erfindung fortbildende Merkmale sind Gegenstand der abhängigen Ansprüche mit den nachstehend angeführten Merkmalen:
Vorzugsweise sind die Werkstücke auf der in dem Entnahmebereich bereitgestellten ersten Werkstückpalette in einer vorbestimmten Werkstückanordnung in Bezug zueinander und in Bezug zur ersten Werkstückpalette ausgerichtet. Insbesondere wird die vorbestimmte Werkstückanordnung in dem vorangehenden Sortierverfahren bereitgestellt. Als vorbestimmte Werkstückanordnung ist eine Anordnung der Werkstücke zu verstehen, die nicht ausschließlich zufällig ist, sondern bei der die Werkstücke entsprechend einem vorher festgelegten Lageplan angeordnet sind. Bei einem solchen vorher festgelegten Lageplan kann zumindest einer der folgenden Parameter vorbestimmt sein: Abstand zweier Werkstücke zueinander, Ausrichtung des Greifbereiches, insbesondere in Bezug auf die z-Achse, Orientierung der einzelnen Werkstücke in Bezug auf die Ablagefläche. Als Orientierung der einzelnen Werkstücke in Bezug auf die Ablagefläche ist zu verstehen, dass eine bestimmte Außenseite des Werkstückes, beispielsweise eine Außenseite eines als Getriebegehäuse für ein Kraftfahrzeug ausgebildeten Werkstückes, die in einem Einbauzustand einer Straße zugewandt ist, einem bestimmten äußeren Rand der ersten Werkstückpalette zugewandt ist.

Ferner vorzugsweise sind die Werkstücke auf der ersten Werkstückpalette gleichartig ausgerichtet. Das heißt beispielsweise, dass jeweils die in dem Einbauzustand der Straße zugewandte Außenseite des Getriebegehäuses dem selben äußeren Rand der ersten Werkstückpalette zugewandt ist.

Vorzugsweise ist die Fördereinrichtung als Rollen- oder Bandförderer ausgebildet, auf dem der Werkstückträger umlaufend zwischen dem Übergabebereich und dem Bearbeitungszentrum oder Wasch- und/oder Prüfzentrum bewegt wird. Ferner vorzugsweise ist die Förderstrecke, entlang der der Werkstückträger bewegt wird, in sich geschlossen, sodass der Werkstückträger ausgehend von einer Ausgangsposition immer weiter entlang der Förderstrecke gefördert wird, um schließlich wieder die Ausgangsposition zu erreichen. Bevorzugt ist entlang der Förderstrecke an zumindest einer vorbestimmten Position ein Stopper vorgesehen, mit dem der Werkstückträger gestoppt werden kann. Insbesondere ist in dem Übergabebereich ein solcher Stopper vorgesehen, sodass das gegriffene Werkstück an den Werkstückträger übergeben werden kann, wenn sich dieser in einer Ruhestellung befindet. Rein exemplarisch ist die Fördereinrichtung als Rollenförderer ausgebildet.

Vorzugsweise wird bei dem Auswählen eines geeigneten, zu greifenden Werkstückes aus den auf der ersten Ablagefläche angeordneten Werkstücken geprüft, ob das auszuwählende Werkstück bereits in dem Bearbeitungszentrum oder in dem Wasch- und/oder Prüfzentrum verwendet wurde, und wird in Ansprechen darauf, dass das betreffende Werkstück bereits in dem Bearbeitungszentrum oder in dem Wasch- und/oder Prüfzentrum verwendet wurde, dieses Werkstück nicht als geeignetes, zu greifendes Werkstück ausgewählt. Hierdurch kann verhindert werden, dass ein bereits bearbeitetes oder gewaschenes und/oder geprüftes Werkstück auf gleiche Weise erneut bearbeitet oder gewaschen und/oder geprüft wird.

Vorzugsweise wird das gegriffene Werkstück mittels der Robotereinrichtung hin zu einer an dem Grundportal angeordneten Codeerfassungseinrichtung bewegt und wird ein auf dem gegriffenen Werkstück aufgebrachter Identifizierungscode mittels der Codeerfassungseinrichtung erfasst. Der Identifizierungscode ist bereits auf dem Werkstück vorhanden, bevor dieses in dem Entnahmebereich bereitgestellt wird. Insbesondere kann der Identifizierungscode jeweils nach dem Gießen der metallisch ausgebildeten Werkstücke aufgebracht sein oder während eines vorgelagerten Sortierverfahrens jeweils auf die Werkstücke aufgebracht werden. Bevorzugt ist der Identifizierungscode spezifisch für ein Werkstück, das heißt, dass ein Identifizierungscode eindeutig einem bestimmten Werkstück zugeordnet werden kann.

Werden bei der weiteren Verwendung in einem Bearbeitungszentrum oder in einem Wasch- und/oder Prüf zentrum Fehler an dem betreffenden Werkstück festgestellt, kann über den Identifizierungscode nachverfolgt werden, woher das Werkstück stammt beziehungsweise welche Prozesse das Werkstück zuvor durchlaufen hat. Fehler an dem betreffenden Werkstück können beispielsweise Risse in dem Werkstück, nicht tolerierbare Grate an dem Werkstück oder eine ungenügende Oberflächenbeschaffenheit an bestimmten Bereichen des Werkstückes sein.

Vorzugsweise wird das mittels der Fördereinrichtung aus dem Übergabebereich herausbewegte Werkstück dem Bearbeitungszentrum oder Wasch- und/oder Prüf zentrum zugeführt, wobei das Werkstück in dem Bearbeitungszentrum oder Wasch- und/oder Prüf zentrum bearbeitet oder gewaschen und/oder geprüft wird, wobei anschließend das bearbeitete oder gewaschene und/oder geprüfte Werkstück auf einem Werkstückträger mittels der Fördereinrichtung zu dem Übergabebereich bewegt wird, wobei daraufhin die Robotereinrichtung mittels der Steuereinrichtung angesteuert wird, sodass der Greifer an das Werkstück herangefahren wird, das Werkstück mittels des Greifers gegriffen wird, indem der Greifer in die Schließstellung versetzt wird, und das gegriffene Werkstück von dem Werkstückträger entnommen wird, wobei insbesondere ein Lagebild von der ersten Werkstückpalette und gegebenenfalls den auf der ersten Werkstückpalette angeordneten Werkstücken mittels der ersten Kameraeinrichtung aufgenommen wird, wobei schließlich das Werkstück auf einer in einem Ablagebereich des Automationsmoduls angeordneten Werkstückpalette, insbesondere auf der ersten Werkstückpalette, abgelegt wird. Ferner vorzugsweise ist der Ablagebereich zumindest teilweise deckungsgleich mit dem Entnahmebereich.

Wird das aus dem Übergabebereich herausbewegte Werkstück dem Waschzentrum zugeführt, wird der Werkstückträger, auf dem das Werkstück angeordnet ist, auch als Waschträger bezeichnet.

Bevorzugt wird vor dem Ablegen eines Werkstückes auf der Werkstückpalette ein Lagebild aufgenommen und wird vor dem Entnehmen eines gegebenenfalls anderen Werkstückes ein anderes Lagebild aufgenommen. Dementsprechend werden für die beiden vorgenannten Verfahrensschritte zwei Lagebilder aufgenommen. Ferner bevorzugt wird anhand des Lagebildes, das vor dem Ablegen des abzulegenden Werkstückes aufgenommen wird, eine Lücke ermittelt, in die das abzulegende Werkstück abgelegt wird. Diese Lücke ist bei dem vor dem Entnehmen aufgenommenen Lagebild nicht mehr sichtbar. Alternativ kann für die beiden vorgenannten Verfahrensschritte ein einzelnes Lagebild aufgenommen werden.

Vorzugsweise wird das bearbeitete oder gewaschene und/oder geprüfte Werkstück auf dieselbe Werkstückpalette abgelegt, von der es auch entnommen wurde und/oder nachfolgend ein anderes Werkstück zur weiteren Verwendung in dem Bearbeitungszentrum oder in dem Wasch- und/oder Prüfzentrum entnommen wird.

Vorzugsweise wird das Werkstück, unter Verwendung von einem Bearbeitungsfluid, insbesondere einer Kühlschmierflüssigkeit, bearbeitet, wobei das Werkstück vorzugsweise bevor es in dem Ablagebereich abgelegt wird, derart geschwenkt wird, dass in dem Werkstück verbleibendes Bearbeitungsfluid aus dem Werkstück austritt. Hierdurch kann die an dem Werkstück anhaftende beziehungsweise in dem Werkstück aufgenommene Menge an Bearbeitungsfluid reduziert werden, sodass Transportwege, Transportmittel und Maschinen nachfolgender Prozesse weniger mit dem Bearbeitungsfluid belastet werden.

Vorzugsweise überlappen der Entnahmebereich und der Ablagebereich einander zumindest teilweise. Hierdurch kann der erforderliche Verfahrweg der Robotereinrichtung reduziert werden.

Ferner vorzugsweise überlappen der Entnahmebereich und der Ablagebereich einander vollständig.

Vorzugsweise werden hintereinander mehrere Werkstücke von der ersten Werkstückpalette entnommen und werden gegebenenfalls hintereinander mehrere Werkstücke auf der ersten Werkstückpalette abgelegt. Ferner vorzugsweise wird jeweils abwechselnd ein Werkstück von der ersten Werkstückpalette entnommen, ein Werkstück auf der ersten Werkstückpalette abgelegt und dann wieder ein Werkstück von der ersten Werkstückpalette entnommen und ein Werkstück auf der ersten Werkstückpalette abgelegt und so weiter. An eine Position der Ablagefläche, die dadurch frei wird, dass ein Werkstück von der ersten Werkstückpalette entnommen wird, kann dieses entnommene Werkstück oder ein anderes Werkstück auf der ersten Werkstückpalette abgelegt werden.

Vorzugsweise wird in dem Entnahmebereich ferner eine zweite Werkstückpalette bereitgestellt, wobei von der ersten Werkstückpalette und/oder von der zweiten Werkstückpalette jeweils Werkstücke entnommen werden, und wobei gegebenenfalls auf der ersten Werkstückpalette und/oder auf der zweiten Werkstückpalette jeweils Werkstücke abgelegt werden. Alles vorstehend zu der ersten Werkstückpalette Genannte gilt in gleicher Weise für die zweite Werkstückpalette. Es können Werkstücke von der ersten Werkstückpalette entnommen werden und gegebenenfalls nach der Bearbeitung oder dem Waschen und/oder dem Prüfen auf der zweite Werkstückpalette abgelegt werden. Alternativ oder in Ergänzung können Werkstücke von der ersten Werkstückpalette entnommen werden und nur die Werkstücke auf der ersten Werkstückpalette abgelegt werden, die auch von der ersten Werkstückpalette entnommen wurden, sowie Werkstücke von der zweiten Werkstückpalette entnommen werden und nur die Werkstücke auf der zweiten Werkstückpalette abgelegt werden, die auch von der zweiten Werkstückpalette entnommen wurden.

Vorzugsweise weist das Automationsmodul ferner eine auf den Entnahmebereich gerichtete zweite Kameraeinrichtung auf, wobei die erste Kameraeinrichtung der ersten Werkstückpalette zugeordnet ist und die zweite Kameraeinrichtung der zweiten Werkstückpalette zugeordnet ist. Alles vorstehend zu der ersten Kameraeinrichtung Genannte gilt in gleicher Weise für die zweite Kameraeinrichtung. Ferner vorzugsweise ist die Robotereinrichtung zwischen der ersten Kameraeinrichtung und der zweiten Kameraeinrichtung angeordnet. Bevorzugt ist die erste Kameraeinrichtung lediglich auf die erste Werkstückpalette gerichtet, während die zweite Kameraeinrichtung insbesondere lediglich auf die zweite Werkstückpalette gerichtet ist.

Die Aufgabe wird ferner gelöst durch ein Automationsmodul mit einem Grundportal, einem Entnahmebereich, einer an dem Grundportal angeordneten, einen, in eine Schließstellung und in eine Offenstellung versetzbaren, Greifer aufweisenden Robotereinrichtung, einer an dem Grundportal angeordneten, auf den Entnahmebereich gerichteten ersten Kameraeinrichtung und einer Steuereinrichtung, wobei das Automationsmodul dazu eingerichtet ist, ein vorstehend beschriebenes Verfahren auszuführen. Das vorstehend jeweils zu den Komponenten des für das Verfahren verwendeten Automationsmoduls Genannte gilt in gleicher Weise für die Komponenten des zur Ausführung des vorstehend beschriebenen Verfahrens eingerichteten Automationsmoduls.

Vorzugsweise weist das Grundportal ein außenliegendes erstes Seitenteil, ein zum ersten Seitenteil beabstandetes, außenliegendes zweites Seitenteil und ein auf dem ersten Seitenteil und auf dem zweiten Seitenteil aufliegendes Dachteil auf, wobei die erste Kameraeinrichtung und/oder die Robotereinrichtung derart an dem Dachteil angeordnet sind, dass diese in einen von dem ersten Seitenteil, dem zweiten Seitenteil und dem Dachteil begrenzten Arbeitsraum hineinhängt/hineinhängen.

Das erste Seitenteil, das zweite Seitenteil und das Dachteil können jeweils aus mehreren Portalträgern und/oder Portalwänden bestehen. Insbesondere ist das erste Seitenteil, das zweite Seitenteil und/oder das Dachteil jeweils mit zumindest einer Portalwand verkleidet. Bevorzugt wird mittels dem ersten Seitenteil, dem zweiten Seitenteil und dem Dachteil ein Gehäuse gebildet, das als äußere Struktur des Automationsmoduls dient.

Bevorzugt weist das Automationsmodul eine Codeerfassungseinrichtung auf. Die Codeerfassungseinrichtung kann an dem ersten Seitenteil, dem zweiten Seitenteil und/oder dem Dachteil befestigt sein. Rein exemplarisch ist die Codeerfassungseinrichtung an dem ersten Seitenteil befestigt.

Vorzugsweise weist der Greifer einen Spannkopf mit einem ersten Spannarm und einem zweiten Spannarm auf, wobei der erste Spannarm und der zweite Spannarm in der Offenstellung weiter voneinander beabstandet sind als in der Schließstellung, wobei der Greifer dazu eingerichtet ist, ein Werkstück dadurch zu greifen, dass in der Schließstellung zwischen dem ersten Spannarm und dem zweiten Spannarm das Werkstück gespannt ist. Hierdurch kann das Werkstück von außen gespannt werden. Alternativ weist der Greifer einen Expansionskopf auf, der in der Offenstellung einen kleineren Außenumfang aufweist als in der Schließstellung, wobei der Greifer dazu eingerichtet ist, ein Werkstück dadurch zu greifen, dass der Expansionskopf in der Schließstellung gegen eine Innenkontur des Werkstückes drückt. Hierdurch kann das Werkstück von innen gespannt werden.

Die Aufgabe wird ferner gelöst durch ein System aus einem vorstehend beschriebenen Automationsmodul und einer Transfervorrichtung, wobei die Transfervorrichtung eine Fördereinrichtung, zumindest einen Werkstückträger und einen Übergabebereich aufweist. Das vorstehend jeweils zu den Komponenten der für das Verfahren verwendeten Transfervorrichtung Genannte gilt in gleicher Weise für die Komponenten der Transfervorrichtung des Systems.

Nachfolgend wird die Erfindung anhand der beiliegenden Zeichnung näher erläutert und in dieser zeigen
- Fig. 1: ein Automationsmodul in einer isometrischen Ansicht,
- Fig. 2: das in Fig. 1 dargestellte Automationsmodul ohne Portalwände in einer isometrischen Ansicht,
- Fig. 3: das in den Fig. 1 und 2 dargestellte Automationsmodul und eine Transfervorrichtung in einer abstrakten Darstellung,
- Fig. 4A: eine mit Werkstücken bestückte erste Werkstückpalette,
- Fig. 4B: eines der in Fig. 4A dargestellten Werkstücke,
- Fig. 5A: einen Greifer in einer Offenstellung mit einem Werkstück,
- Fig. 5B: die in Fig. 5A dargestellte Anordnung, wobei sich der Greifer in einer Schließstellung befindet, und
- Fig. 6: ein Verfahren.

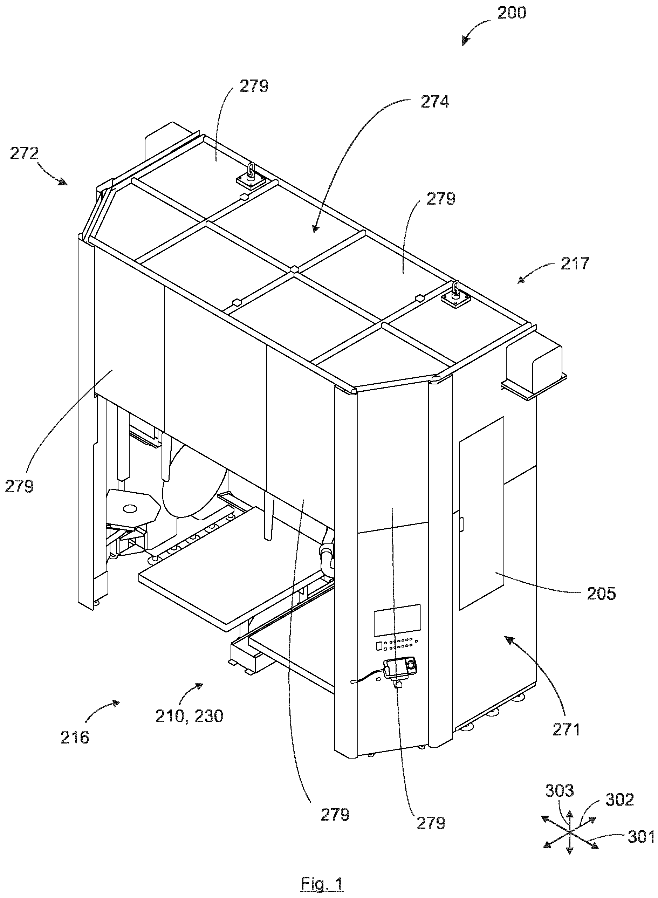

Fig. 1 zeigt ein Automationsmodul 200. Das Automationsmodul 200 erstreckt sich entlang einer x-Achse 301, einer senkrecht zu der x-Achse 301 verlaufenden y-Achse 302 und einer senkrecht zu der x-Achse 301 und senkrecht zu der y-Achse 302 verlaufenden z-Achse 303.

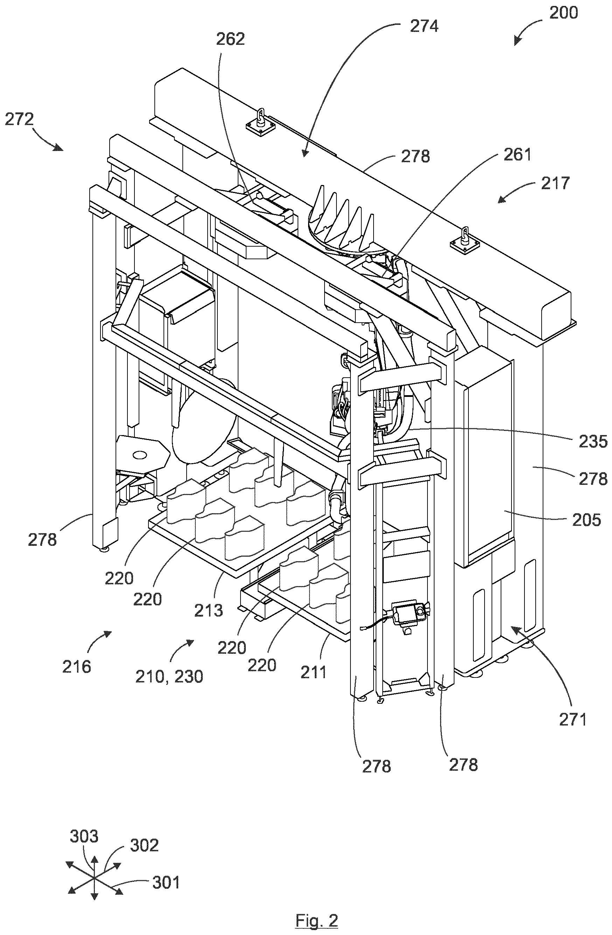

Das Automationsmodul 200 weist ein nicht mit einem Bezugszeichen versehenes Grundportal auf. Das Grundportal weist mehrere Portalelemente auf. Rein exemplarisch weist das Grundportal als Portalwände 279 ausgebildete Portalelemente auf, die an als Portalträgern 278 ausgebildeten Portalelementen angeordnet sind. Fig. 2 zeigt das in Fig. 1 dargestellte Automationsmodul 200 ohne Portalwände 279. In Fig. 2 sind die Portalträger 278 ersichtlich, an denen die Portalwände 279 angeordnet beziehungsweise befestigt sind.

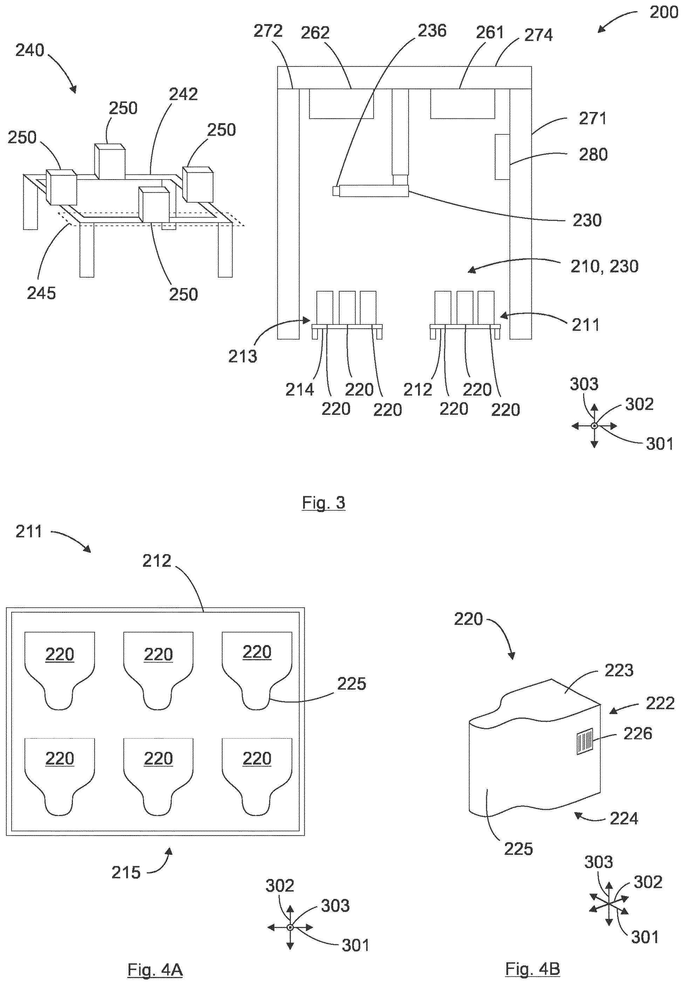

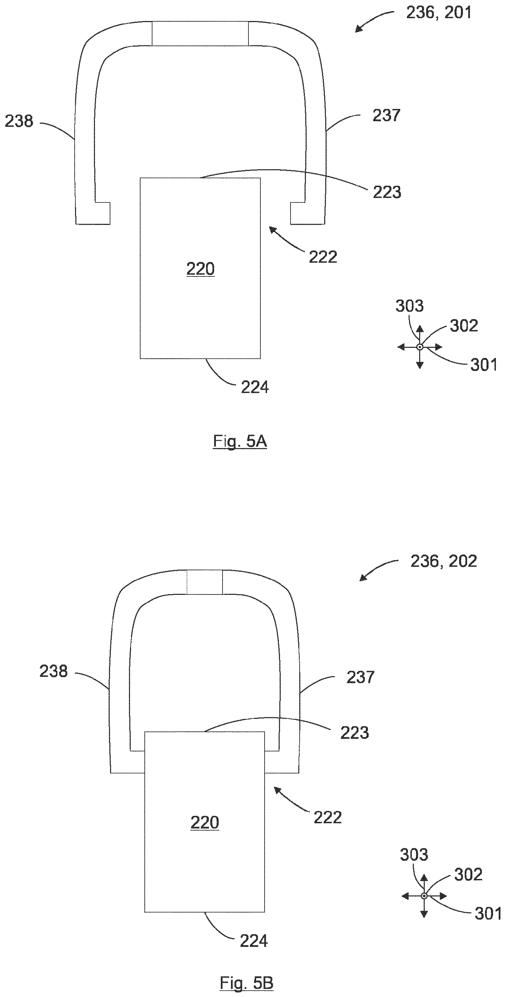

Das Automationsmodul 200 weist ferner einen Entnahmebereich 210 und einen Ablagebereich 230 auf. Rein exemplarisch ist der Ablagebereich 230 deckungsgleich mit dem Entnahmebereich 210. Zudem weist das Automationsmodul 200 eine Robotereinrichtung 235 auf. Die Robotereinrichtung 235 weist einen in eine Schließstellung 202 und in eine Offenstellung 201 versetzbaren Greifer 236 auf, der in den Fig. 3, 5A und 5B dargestellt ist. Weiterhin weist das Automationsmodul 200 eine an dem Grundportal angeordnete, auf den Entnahmebereich 210 gerichtete erste Kameraeinrichtung 261 und eine Steuereinrichtung 205 auf. Rein exemplarisch weist das Automationsmodul 200 zudem eine an dem Grundportal angeordnete, auf den Entnahmebereich 210 gerichtete zweite Kameraeinrichtung 262 auf.

Ferner exemplarisch weist das Grundportal ein außenliegendes erstes Seitenteil 271, ein zum ersten Seitenteil 271 beabstandetes, außenliegendes zweites Seitenteil 272 und ein auf dem ersten Seitenteil 271 und auf dem zweiten Seitenteil 272 aufliegendes Dachteil 274 auf. Dabei sind die erste Kameraeinrichtung 261 und die Robotereinrichtung 235 derart an dem Dachteil 274 angeordnet, dass diese in einen von dem ersten Seitenteil 271, dem zweiten Seitenteil 272 und dem Dachteil 274 begrenzten, nicht mit einem Bezugszeichen versehenen Arbeitsraum hineinhängen.

Rein exemplarisch weisen das erste Seitenteil 271, das zweite Seitenteil 272 und das Dachteil 274 jeweils mehrere Portalträger 278 und mehrere Portalwände 279 auf. In den Fig. 1 und 2 sind aus Gründen der Übersichtlichkeit jeweils nicht alle sichtbaren Portalträger 278 und Seitenwände 279 mit einem Bezugszeichen versehen. Das Automationsmodul 200 weist eine Einlassseite 216 und eine Auslassseite 217 auf. Die Einlassseite 216 und die Auslassseite 217 sind in Bezug auf die y-Achse 302 auf einander gegenüberliegenden Seiten des Automationsmoduls 200 angeordnet. Über die Einlassseite 216 ist der Entnahmebereich 210 zugänglich. Rein exemplarisch kann mittels der Robotereinrichtung 235 über die Auslassseite 217 eine in Fig. 3 dargestellte Transfervorrichtung 240 erreicht werden.

Zudem ist über die Einlassseite 216 eine erste Werkstückpalette 211 in das Automationsmodul 200 eingeführt. Rein exemplarisch ist neben der ersten Werkstückpalette 211 eine zweite Werkstückpalette 213 in das Automationsmodul 200 eingeführt und in dem Entnahmebereich 210 angeordnet. Da der Ablagebereich 230 rein exemplarisch den Entnahmebereich 210 überdeckt, sind rein exemplarisch die erste Werkstückpalette 211 und die zweite Werkstückpalette 213 auch in dem Ablagebereich 230 angeordnet. Weiter exemplarisch ist die erste Kameraeinrichtung 261 lediglich auf die erste Werkstückpalette 211 gerichtet, während die zweite Kameraeinrichtung 262 lediglich auf die zweite Werkstückpalette 213 gerichtet ist.

Rein exemplarisch ist das Automationsmodul 200 abgesehen von der Einlassseite 216 und der Auslassseite 217 vollständig mit Portalwänden 279 verkleidet. Die Einlassseite 216 und die Auslassseite 217 sind jeweils nur teilweise mit Portalwänden 279 verkleidet und dementsprechend jeweils teilweise offen.

Fig. 3 zeigt das in den Fig. 1 und 2 dargestellte Automationsmodul 200 und eine Transfervorrichtung 240 in einer abstrakten Darstellung. Die Transfervorrichtung 240 weist eine Fördereinrichtung 242, zumindest einen Werkstückträger 250 und einen Übergabebereich 245 auf. Rein exemplarisch weist die Transfervorrichtung 240 vier Werkstückträger 250 auf. Ferner exemplarisch ist die Fördereinrichtung 242 als Rollenförderer ausgebildet. Mittels der Fördereinrichtung 242 sind die Werkstückträger 250 in dem Übergabebereich 245 bereitstellbar. Rein exemplarisch ist einer der vier Werkstückträger 250 in dem Übergabebereich 245 bereitgestellt.

Die erste Werkstückpalette 211 weist eine erste Ablagefläche 212 auf. Die zweite Werkstückpalette 213 weist eine zweite Ablagefläche 214 auf. Die erste Werkstückpalette 211 und die zweite Werkstückpalette 213 sind jeweils mit Werkstücken 220 bestückbar.

Ein Werkstück 220 ist dadurch greifbar, dass der Greifer 236 in die Schließstellung 202 versetzt wird. Ein gegriffenes Werkstück 220 kann an den in dem Übergabebereich 245 bereitgestellten Werkstückträger 250 durch eine durch die Robotereinrichtung 235 durchgeführte Überführungsbewegung überführt werden. Das an den Werkstückträger 250 überführte Werkstück 220 kann an den Werkstückträger 250 übergeben werden, indem der Greifer 236 in die Offenstellung 201 versetzt wird.

Ein mit einem Werkstück 220 bestückter Werkstückträger 250 kann mittels der Fördereinrichtung 242 aus dem Übergabebereich 245 heraus zur weiteren Verwendung in einem nicht dargestellten Bearbeitungszentrum oder in einem nicht dargestellten Wasch- und/oder Prüf zentrum bewegt werden.

Fig. 4A zeigt die mit Werkstücken 220 bestückte erste Werkstückpalette 211. Alles nachstehend in Bezug auf die erste Werkstückpalette 211 Genannte gilt in gleicher Weise für die zweite Werkstückpalette 213, sofern eine solche vorgesehen ist. Rein exemplarisch sind die Werkstücke 220 auf der ersten Werkstückpalette 211 gleichartig ausgerichtet. Das heißt beispielsweise, dass jeweils ein Vorderteil 225 der Werkstücke 220 (in Fig. 4A ist aus Gründen der Übersichtlichkeit lediglich bei einem Werkstück 220 ein Vorderteil 225 mit einem Bezugszeichen versehen) der gleichen Seite der ersten Werkstückpalette 211 zugewandt ist, rein exemplarisch einer Vorderseite 215 der ersten Werkstückpalette 211.

Fig. 4B zeigt exemplarisch ein einzelnes Werkstück 220. Das Werkstück 220 weist einen Greifbereich 222 und eine Unterseite 224 auf. Rein exemplarisch weist das Werkstück 220 zudem eine Oberseite 223 auf. Ferner exemplarisch ist der Greifbereich 222 in der Nähe der Oberseite 223 angeordnet. Die Oberseite 223 und die Unterseite 224 sind entlang der z-Achse 303 voneinander beabstandet. Die Werkstücke 220 sind jeweils mit ihrer Unterseite 224 auf der ersten Ablagefläche 212 beziehungsweise auf der zweiten Ablagefläche 214 abgelegt. Rein exemplarisch sind die Oberseiten 223 der Werkstücke 220 jeweils der Robotereinrichtung 235 zugewandt.

Weiter exemplarisch weist das Werkstück 220 einen Identifizierungscode 226 auf. Rein exemplarisch weist das Automationsmodul 200 eine an dem Grundportal angeordnete Codeerfassungseinrichtung 280 auf (vgl. Fig. 3). Ferner exemplarisch ist der Identifizierungscode 226 mit der Codeerfassungseinrichtung 280 erfassbar.

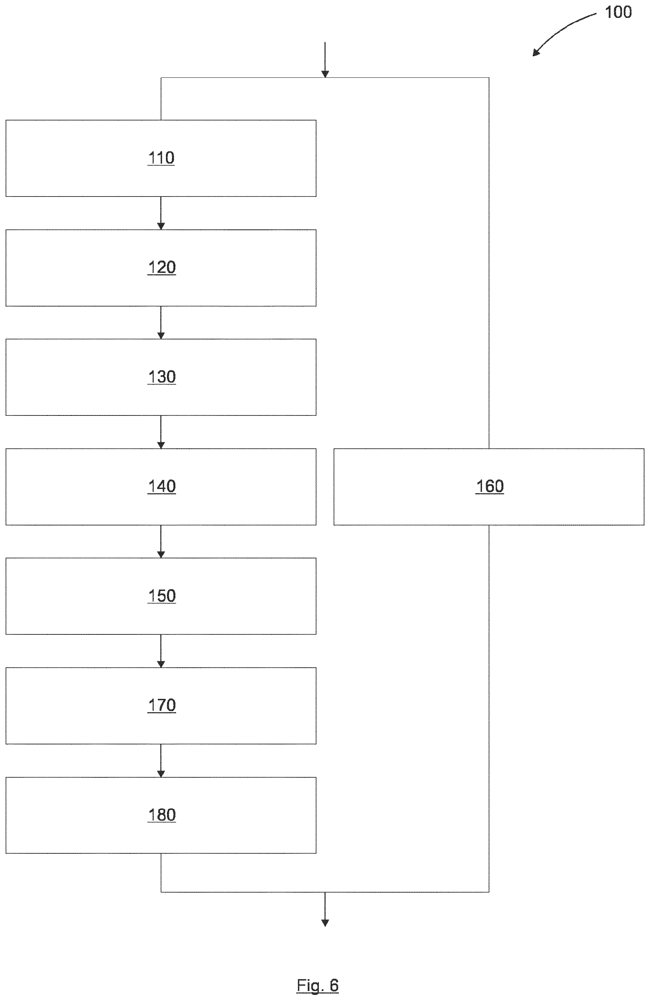

Mittels der Robotereinrichtung 235 sind im Zuge eines in Fig. 6 dargestellten Verfahrens 100 die Werkstücke 220 von der ersten Werkstückpalette 211 und gegebenenfalls von der zweiten Werkstückpalette 213 entnehmbar.

Fig. 5A zeigt eine exemplarische Ausführungsform des Greifers 236. In der in Fig. 5A dargestellten Anordnung befindet sich der Greifer 236 in einer Offenstellung 201 und in der in Fig. 5B dargestellten Anordnung in einer Schließstellung 202. Rein exemplarisch weist der Greifer 236 einen Spannkopf mit einem ersten Spannarm 237 und einem zweiten Spannarm 238 auf. In der Offenstellung 201 (vgl. Fig. 5A) sind der erste Spannarm 237 und der zweite Spannarm 238 weiter voneinander beabstandet als in der Schließstellung 202 (vgl. Fig. 5B). Der Greifer 236 ist dazu eingerichtet, das Werkstück 220 dadurch zu greifen, dass dieses in der Schließstellung 202 zwischen dem ersten Spannarm 237 und dem zweiten Spannarm 238 gespannt ist. Der erste Spannarm 237 und der zweite Spannarm 238 liegen in dem Greifbereich 222 an dem Werkstück 220 an.

Fig. 6 zeigt das Verfahren 100. Das Verfahren 100 weist acht Schritte a. 110 bis h. 180 auf. Rein exemplarisch folgen die Schritte a. 110, b. 120, c. 130, d. 140, e. 150, g. 170 und h. 180 aufeinander. Ferner exemplarisch wird der Schritt f. 160 parallel zu den Schritten a. 110 bis e. 150, g. 170 und h. 180 durchgeführt. Alternativ kann der Schritt f. zwischen zwei beliebigen Schritten der Schritte a. 110 bis e. 150, g. 170 und h. 180 durchgeführt, beispielsweise zwischen den Schritten e. 150 und g. 170. Das Verfahren 100 wird unter Verwendung des vorstehend beschriebenen Automationsmoduls 200 sowie unter Verwendung der vorstehend beschriebenen Transfervorrichtung 240 durchgeführt.

Bei Schritt a. 110 wird wenigstens eine mit einer ersten Ablagefläche 212 ausgestattete erste Werkstückpalette 211 in dem Entnahmebereich 210 bereitgestellt, wobei die erste Werkstückpalette 211 mit Werkstücken 220 bestückt ist, die jeweils einen Greifbereich 222 und eine Unterseite 224 aufweisen, mit der die Werkstücke 220 auf der ersten Ablagefläche 212 abgelegt sind.

Bei Schritt b. 120 wird ein Lagebild von der ersten Werkstückpalette 211 und den auf der ersten Werkstückpalette 211 angeordneten Werkstücken 220 mittels der ersten Kameraeinrichtung 261 aufgenommen.

Bei Schritt c. 130 werden Lageinformationen der Werkstücke 220 in Bezug zueinander unter Berücksichtigung des Lagebildes ermittelt, wobei die Lageinformationen einzelne Positionen der Werkstücke 220 auf der ersten Ablagefläche 212 umfassen.

Bei Schritt d. 140 wird ein geeignetes, zu greifendes Werkstück 220 aus den auf der ersten Ablagefläche 212 angeordneten Werkstücken 220 unter Berücksichtigung der Lageinformationen ausgewählt.

Bei Schritt e. 150 wird die Robotereinrichtung 235 mittels der Steuereinrichtung 205 durch Übermitteln der Position des ausgewählten Werkstückes 220 angesteuert, sodass der Greifer 236 an das Werkstück 220 herangefahren wird, das Werkstück 220 mittels des Greifers 236 gegriffen wird, indem der Greifer 236 in die Schließstellung 202 versetzt wird, und das gegriffene Werkstück 220 von der ersten Werkstückpalette 211 entnommen wird.

Bei Schritt f. 160 wird der Werkstückträger 250 in dem Übergabebereich 245 mittels der Fördereinrichtung 242 bereitgestellt.

Bei Schritt g. 170 wird das gegriffene Werkstück 220 an den Werkstückträger 250 mittels einer durch die Robotereinrichtung 235 durchgeführten Überführungsbewegung überführt und wird das Werkstück 220 an den Werkstückträger 250 übergeben, wobei bei dem Übergeben der Greifer 236 in die Offenstellung 201 versetzt wird.

Bei Schritt h. 180 wird der mit dem Werkstück 220 bestückte Werkstückträger 250 mittels der Fördereinrichtung 242 aus dem Übergabebereich 245 herausbewegt zur weiteren Verwendung in einem Bearbeitungszentrum oder in einem Wasch- und/oder Prüfzentrum.

## Patentansprüche

1. Verfahren (100) zur automatisierten Handhabung von Werkstücken (220) unter Verwendung eines Automationsmoduls (200), mit einem Grundportal, einem Entnahmebereich (210), einer an dem Grundportal angeordneten, einen, in eine Schließstellung (202) und in eine Offenstellung (201) versetzbaren, Greifer (236) aufweisenden Robotereinrichtung (235), einer an dem Grundportal angeordneten, auf den Entnahmebereich (210) gerichteten ersten Kameraeinrichtung (261) und einer Steuereinrichtung (205), sowie unter Verwendung einer Transfervorrichtung (240), mit einer Fördereinrichtung (242), zumindest einem Werkstückträger (250) und einem Übergabebereich (245), wobei das Verfahren (100) folgende Schritte umfasst:
a. Bereitstellen wenigstens einer mit einer ersten Ablagefläche (212) ausgestatteten ersten Werkstückpalette (211) in dem Entnahmebereich (210), wobei die erste Werkstückpalette (211) mit Werkstücken (220) bestückt ist, die jeweils einen Greifbereich (222) und eine Unterseite (224) aufweisen, mit der die Werkstücke (220) auf der ersten Ablagefläche (212) abgelegt sind,
b. Aufnehmen eines Lagebildes von der ersten Werkstückpalette (211) und den auf der ersten Werkstückpalette (211) angeordneten Werkstücken (220) mittels der ersten Kameraeinrichtung (261),
c. Ermitteln von Lageinformationen der Werkstücke (220) in Bezug zueinander unter Berücksichtigung des Lagebildes, wobei die Lageinformationen einzelne Positionen der Werkstücke (220) auf der ersten Ablagefläche (212) umfassen,
d. Auswählen eines geeigneten, zu greifenden Werkstückes (220) aus den auf der ersten Ablagefläche (212) angeordneten Werkstücken (220) unter Berücksichtigung der Lageinformationen,
e. Ansteuern der Robotereinrichtung (235) mittels der Steuereinrichtung (205) durch Übermitteln der Position des ausgewählten Werkstückes (220), sodass der Greifer (236) an das Werkstück (220) herangefahren wird, das Werkstück (220) mittels des Greifers (236) gegriffen wird, indem der Greifer (236) in die Schließstellung (202) versetzt wird, und das gegriffene Werkstück (220) von der ersten Werkstückpalette (211) entnommen wird,
f. Bereitstellen des Werkstückträgers (250) in dem Übergabebereich (245) mittels der Fördereinrichtung (242),
g. Überführen des gegriffenen Werkstückes (220) an den Werkstückträger (250) mittels einer durch die Robotereinrichtung (235) durchgeführten Überführungsbewegung und Übergeben des Werkstückes (220) an den Werkstückträger (250), wobei bei dem Übergeben der Greifer (236) in die Offenstellung (201) versetzt wird, und
h. Bewegen des mit dem Werkstück (220) bestückten Werkstückträgers (250) mittels der Fördereinrichtung (242) aus dem Übergabebereich (245) heraus zur weiteren Verwendung in einem Bearbeitungszentrum oder in einem Wasch- und/oder Prüf zentrum.

2. Verfahren (100) nach einem der vorhergehenden Ansprüche, **dadurch gekennzeichnet, dass** auf der in dem Entnahmebereich (210) bereitgestellten ersten Werkstückpalette (211) die Werkstücke (220) in einer vorbestimmten Werkstückanordnung in Bezug zueinander und in Bezug zur ersten Werkstückpalette (211) ausgerichtet sind.

3. Verfahren (100) nach einem der vorhergehenden Ansprüche, **dadurch gekennzeichnet, dass** die Fördereinrichtung (242) als Rollen- oder Bandförderer ausgebildet ist, auf dem der Werkstückträger (250) umlaufend zwischen dem Übergabebereich (245) und dem Bearbeitungszentrum oder Wasch- und/oder Prüfzentrum bewegt wird.

4. Verfahren (100) nach einem der vorhergehenden Ansprüche, **dadurch gekennzeichnet, dass** bei dem Auswählen eines geeigneten, zu greifenden Werkstückes (220) aus den auf der ersten Ablagefläche (212) angeordneten Werkstücken (220) geprüft wird, ob das auszuwählende Werkstück (220) bereits in dem Bearbeitungszentrum oder in dem Wasch- und/oder Prüfzentrum verwendet wurde, und in Ansprechen darauf, dass das betreffende Werkstück (220) bereits in dem Bearbeitungszentrum oder in dem Wasch- und/oder Prüfzentrum verwendet wurde, dieses Werkstück (220) nicht als geeignetes, zu greifendes Werkstück (220) ausgewählt wird.

5. Verfahren (100) nach einem der vorhergehenden Ansprüche, **dadurch gekennzeichnet, dass** das gegriffene Werkstück (220) mittels der Robotereinrichtung (235) hin zu einer an dem Grundportal angeordneten Codeerfassungseinrichtung (280) bewegt wird und ein auf dem gegriffenen Werkstück (220) aufgebrachter Identifizierungscode (226) mittels der Codeerfassungseinrichtung (280) erfasst wird.

6. Verfahren (100) nach einem der vorhergehenden Ansprüche, **dadurch gekennzeichnet, dass** das mittels der Fördereinrichtung (242) aus dem Übergabebereich (245) herausbewegte Werkstück (220) dem Bearbeitungszentrum oder Wasch- und/oder Prüfzentrum zugeführt wird, wobei das Werkstück (220) in dem Bearbeitungszentrum oder Wasch- und/oder Prüf zentrum bearbeitet oder gewaschen und/oder geprüft wird, wobei anschließend das bearbeitete oder gewaschene und/oder geprüfte Werkstück (220) auf einem Werkstückträger (250) mittels der Fördereinrichtung (242) zu dem Übergabebereich (245) bewegt wird, wobei daraufhin die Robotereinrichtung (235) mittels der Steuereinrichtung (205) angesteuert wird, sodass der Greifer (236) an das Werkstück (220) herangefahren wird, das Werkstück (220) mittels des Greifers (236) gegriffen wird, indem der Greifer (236) in die Schließstellung (202) versetzt wird, und das gegriffene Werkstück (220) von dem Werkstückträger (250) entnommen wird, wobei insbesondere ein Lagebild von der ersten Werkstückpalette (211) und gegebenenfalls den auf der ersten Werkstückpalette (211) angeordneten Werkstücken (220) mittels der ersten Kameraeinrichtung (261) aufgenommen wird, wobei schließlich das Werkstück (220) auf einer in einem Ablagebereich (230) des Automationsmoduls (200) angeordneten Werkstückpalette (211, 213), insbesondere auf der ersten Werkstückpalette (211), abgelegt wird, wobei vorzugsweise der Ablagebereich (230) zumindest teilweise deckungsgleich mit dem Entnahmebereich (210) ist.

7. Verfahren (100) nach Anspruch 6, **dadurch gekennzeichnet, dass** das Werkstück (220), unter Verwendung von einem Bearbeitungsfluid, insbesondere einer Kühlschmierflüssigkeit, bearbeitet wird, wobei das Werkstück (220) vorzugsweise bevor es in dem Ablagebereich (230) abgelegt wird, derart geschwenkt wird, dass in dem Werkstück (220) verbleibendes Bearbeitungsfluid aus dem Werkstück (220) austritt.

8. Verfahren (100) nach Anspruch 6 oder 7, **dadurch gekennzeichnet, dass** der Entnahmebereich (210) und der Ablagebereich (230) einander zumindest teilweise überlappen.

9. Verfahren (100) nach einem der vorhergehenden Ansprüche, **dadurch gekennzeichnet, dass** hintereinander mehrere Werkstücke (220) von der ersten Werkstückpalette (211) entnommen werden und gegebenenfalls hintereinander mehrere Werkstücke (220) auf der ersten Werkstückpalette (211) abgelegt werden.

10. Verfahren (100) nach einem der vorhergehenden Ansprüche, **dadurch gekennzeichnet, dass** in dem Entnahmebereich (210) ferner eine zweite Werkstückpalette (213) bereitgestellt wird, wobei von der ersten Werkstückpalette (211) und/oder von der zweiten Werkstückpalette (213) jeweils Werkstücke (220) entnommen werden, und wobei gegebenenfalls auf der ersten Werkstückpalette (211) und/oder auf der zweiten Werkstückpalette (213) jeweils Werkstücke (220) abgelegt werden.

11. Verfahren (100) nach Anspruch 10, **dadurch gekennzeichnet, dass** das Automationsmodul (200) ferner eine auf den Entnahmebereich (210) gerichtete zweite Kameraeinrichtung (262) aufweist, wobei die erste Kameraeinrichtung (261) der ersten Werkstückpalette (211) zugeordnet ist und die zweite Kameraeinrichtung (262) der zweiten Werkstückpalette (213) zugeordnet ist.

12. Automationsmodul (200) mit einem Grundportal, einem Entnahmebereich (210), einer an dem Grundportal angeordneten, einen, in eine Schließstellung (202) und in eine Offenstellung (201) versetzbaren, Greifer (236) aufweisenden Robotereinrichtung (235), einer an dem Grundportal angeordneten, auf den Entnahmebereich (210) gerichteten ersten Kameraeinrichtung (261) und einer Steuereinrichtung (205), wobei das Automationsmodul (200) dazu eingerichtet ist, ein Verfahren (100) nach einem der vorhergehenden Ansprüche auszuführen.

13. Automationsmodul (200) nach Anspruch 12, **dadurch gekennzeichnet, dass** das Grundportal ein außenliegendes erstes Seitenteil (271), ein zum ersten Seitenteil (271) beabstandetes, außenliegendes zweites Seitenteil (272) und ein auf dem ersten Seitenteil (271) und auf dem zweiten Seitenteil (272) aufliegendes Dachteil (274) aufweist, wobei die erste Kameraeinrichtung (261) und/oder die Robotereinrichtung (235) derart an dem Dachteil (274) angeordnet sind, dass diese in einen von dem ersten Seitenteil (271), dem zweiten Seitenteil (272) und dem Dachteil (274) begrenzten Arbeitsraum hineinhängt/hineinhängen.

14. Automationsmodul (200) nach Anspruch 12 oder 13, **dadurch gekennzeichnet, dass** der Greifer (236) einen Spannkopf mit einem ersten Spannarm (237) und einem zweiten Spannarm (238) aufweist, wobei der erste Spannarm (237) und der zweite Spannarm (238) in der Offenstellung (201) weiter voneinander beabstandet sind als in der Schließstellung (202), wobei der Greifer (236) dazu eingerichtet ist, ein Werkstück (220) dadurch zu greifen, dass in der Schließstellung (202) zwischen dem ersten Spannarm (237) und dem zweiten Spannarm (238) das Werkstück (220) gespannt ist.

15. System aus einem Automationsmodul (200) nach einem der Ansprüche 12 bis 14 und einer Transfervorrichtung (240), wobei die Transfervorrichtung (240) eine Fördereinrichtung (242), zumindest einen Werkstückträger (250) und einen Übergabebereich (245) aufweist.
